# EUROPÄISCHE PATENTSCHRIFT

(11) **EP 1 412 683 B1**
(45) Veröffentlichungstag und Bekanntmachung des Hinweises auf die Patenterteilung: **31.05.2006**
(21) Anmeldenummer: 02758121.4
(22) Anmeldetag: 26.07.2002
(51) Int. Cl.: F26B 3/28

(54) **BESTRAHLUNGSVORRICHTUNG MIT ABLUFTDÜSE**
IRRADIATION DEVICE COMPRISING AN AIR EVACUATION NOZZLE
DISPOSITIF D'EXPOSITION A UN RAYONNEMENT COMPORTANT UNE BUSE D'EVACUATION D'AIR

(30) Priorität: 27.07.2001 DE 20112396 U
(43) Veröffentlichungstag der Anmeldung: 28.04.2004
(73) Patentinhaber: Ackermann, Gunther, 81737 München (DE); Gerstendörfer-Hart, Barbara, 82544 Egling (DE)
(72) Erfinder: Ackermann, Gunther, 81737 München (DE); Gerstendörfer-Hart, Barbara, 82544 Egling (DE)
(86) Internationale Anmeldenummer: PCT/DE2002/002743
(87) Internationale Veröffentlichungsnummer: WO 2003/012353

(56) Entgegenhaltungen:
- EP-A- 0 416 868
- WO-A-87/04739
- WO-A-88/07103
- DE-A- 4 214 141
- DE-A- 19 807 643
- DE-A- 19 810 455
- US-A- 3 991 484
- US-A- 4 594 795
- US-A- 4 646 446
- US-A- 4 654 979
- US-A- 4 854 052
- US-A- 5 440 821
- US-A- 6 026 748
- US-A- 6 088 931
- US-A- 6 118 130

## Beschreibung

Die vorliegende Erfindung betrifft eine Vorrichtung zur Erwärmung von Substraten mit einem oder mehreren Emittern zur Emission von elektromagnetischer Strahlung sowie mit einem oder mehreren, vorzugsweise düsenartigen, Strömungskanälen für das erwärmte Kühlmittel beziehungsweise Temperiermittel, mit den im Oberbegriff des Patentanspruchs 1 angegebenen Merkmalen, wie sie aus der US-A-6 088 931 bekannt sind.

Zum Stand der Technik gehören Vorrichtungen zur Erwärmung von Substraten, welche mittels eines Heißluftstromes die Erwärmung eines Substrates herbeiführen.

Ein wesentlicher Nachteil derartiger bekannter Vorrichtungen zur Erwärmung von Substraten mittels eines Heißluftstromes liegt darin, daß dort große Wärmemengen dem zu erwärmenden Substrat nicht zugeführt werden können.
Die Zufuhr von besonders großen Wärmemengen auf das zu erwärmende Substrat ist beispielsweise bei der Trocknung bei hohen Bandgeschwindigkeiten des zu erwärmenden Substrates erforderlich, insbesondere in drucktechnischen Prozessen oder bei Lackiervorgängen.

Ein weiterer Nachteil der bekannten, auf einem Heißluftstrom basierenden Vorrichtungen zur Erwärmung von Substraten, ist darin zu sehen, daß sich dort das unterhalb des zu erwärmenden Substrates befindliche Trägermaterial aufgrund des Wärmeleiteffektes in der Regel stark erwärmt, wodurch es zu stets unerwünschten Formveränderungen des Trägermaterials in Gestalt von Schrumpf und/oder Verzug kommt.

Besonders nachteilig ist dort ferner, daß die Energie für die Erwärmung des Heißluftstromes nur mit einem niedrigen Wirkungsgrad ausgenutzt werden kann.

Der Energieverbrauch zur Erzeugung eines Heißluftstromes ist daher sehr hoch.

Aufgabe der vorliegenden Erfindung ist nun die Bereitstellung einer Vorrichtung zur Erwärmung beziehungsweise Temperierung von Substraten, welche zielgerichtet und besonders effektiv -das heißt energiesparend- die Zufuhr besonders großer Wärmemengen zu einem zu erwärmenden Substrat ermöglicht, auf den Einsatz energieverschwendender Heißluftdüsen verzichtet und das Problem von Formveränderungen insbesondere des unterhalb des zu erwärmenden Substrates befindlichen Trägermaterials nicht kennt.

Erfindungsgemäß wir diese Aufgabe bei einer gattungsgemä-ßen Vorrichtung durch die im kennzeichnenden Teil des Patentanspruchs 1 angegebenen Merkmale gelöst.
Besonders bevorzugte Ausführungsformen sind Gegenstand der Unteransprüche.

Ausführungsbeispiele der Erfindung werden anhand der Zeichnungen näher beschrieben. Es zeigen:

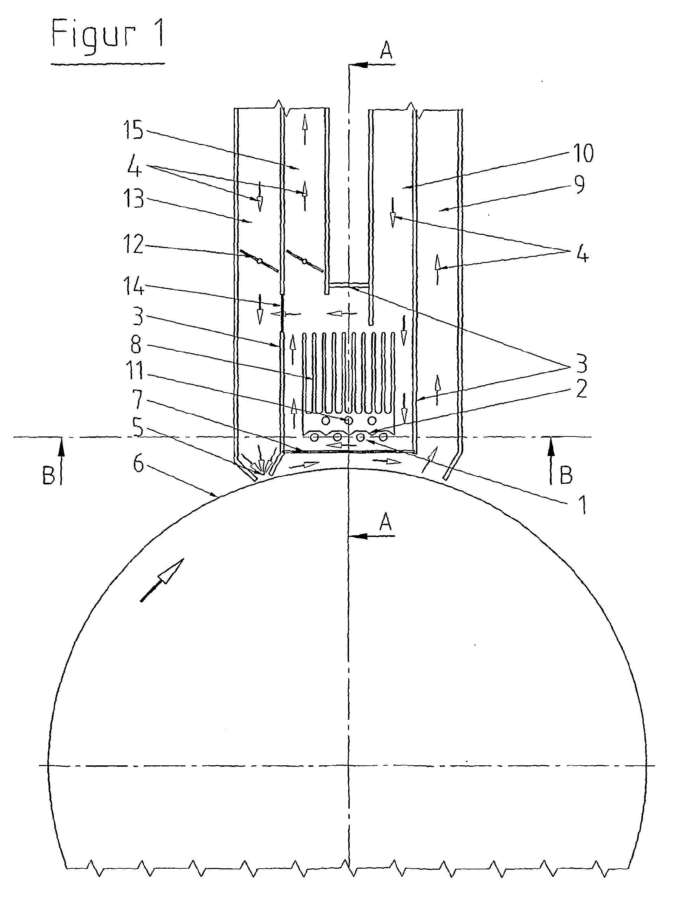

Figur 1 einen schematischen Querschnitt durch eine erfindungsgemäße Vorrichtung zur Erwärmung von Substraten mit einer kammerförmigen, einen Reflektor und die Emitter seitlich umfassenden Temperiermittelführung, in welche über eine Temperiermittelzuführung Temperiermittel einströmt und aus welcher über eine Temperiermittelabführung Temperiermittel abströmt, wobei auf der einen Seite der kammerförmigen Temperiermittelführung ein auf das zu bestrahlende Substrat düsenartig gerichteter separater Zufuhrkanal für ein Temperiermittel vorgesehen ist, während auf der gegenüberliegenden anderen Seite der kammerförmigen Temperiermittelführung ein Abführkanal für den Abtransport von an dem Substrat entlanggeströmtem Temperiermittel ausgebildet ist;

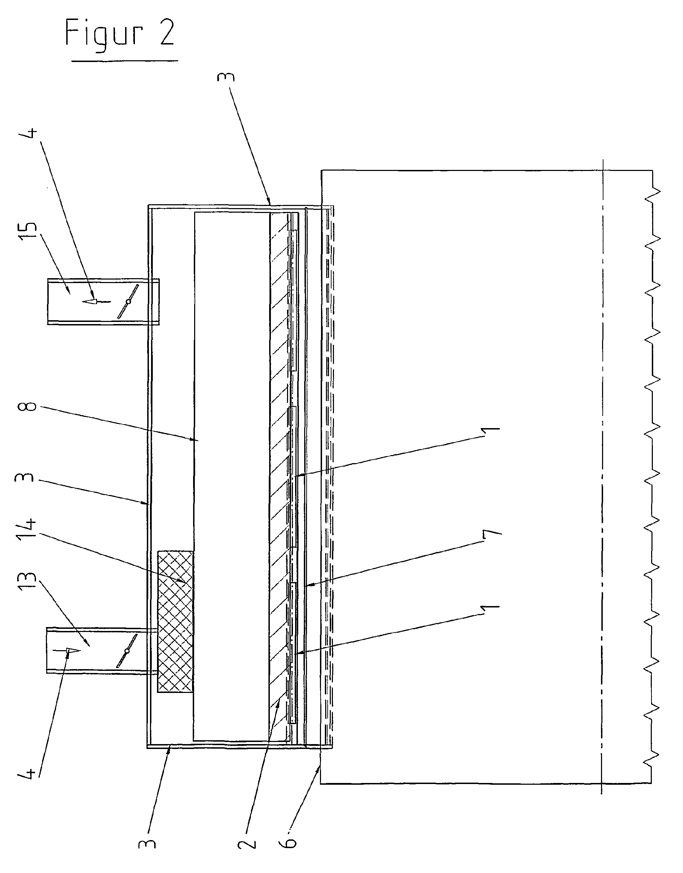

Figur 2 einen Längsschnitt einer erfindungsgemäßen Vorrichtung zur Erwärmung eines Substrates entlang der Linie A-A in Figur 1;

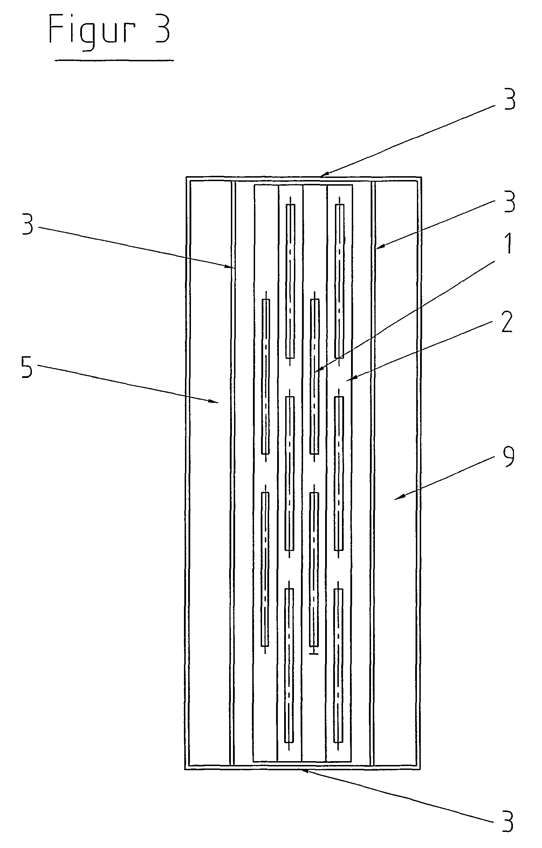

Figur 3 einen schematischen Querschnitt einer erfindungsgemäßen Vorrichtung zur Erwärmung eines Substrates entlang der Linie B-B in Figur 1;

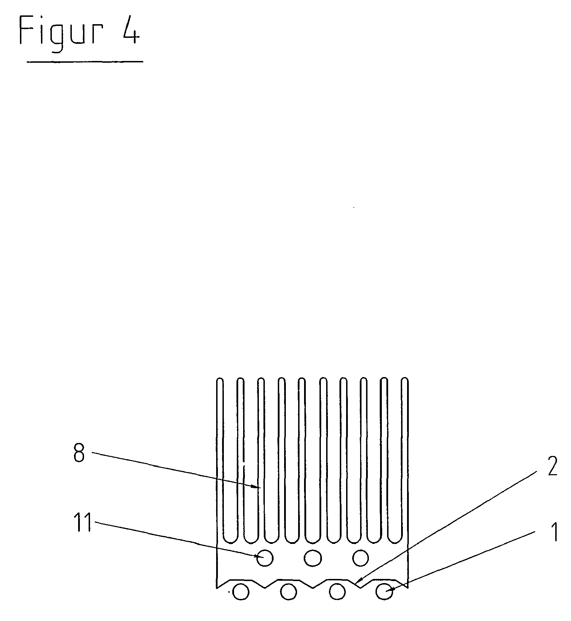

Figur 4 eine schematische, ausschnittsweise Vergrößerung eines erfindungsgemäß verwendeten polygonalen Reflektors mit Kühlrippen und Kanälen für ein flüssiges Kühlmittel beziehungsweise Temperiermittel.

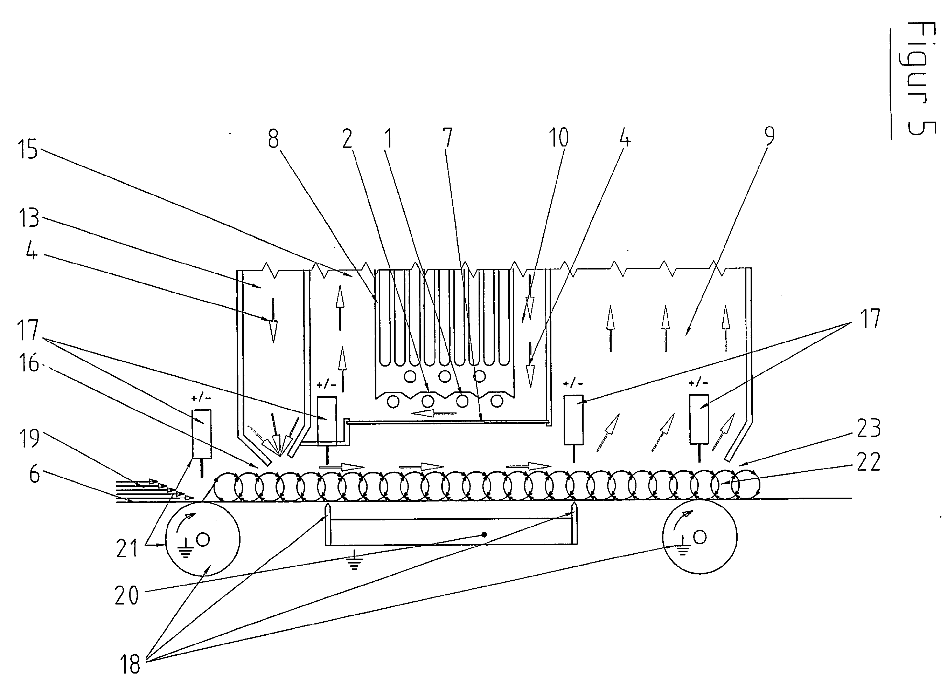

Figur 5 einen schematischen Querschnitt einer erfindungsgemäßen Vorrichtung mit mehreren Einrichtungen zur Verwirbelung der laminar an dem zu bestrahlenden Substrat anhaftenden Grenzschicht mit zwei walzenförmigen und zwei leistenförmigen Gegenelektroden und einem Gegenreflektor;

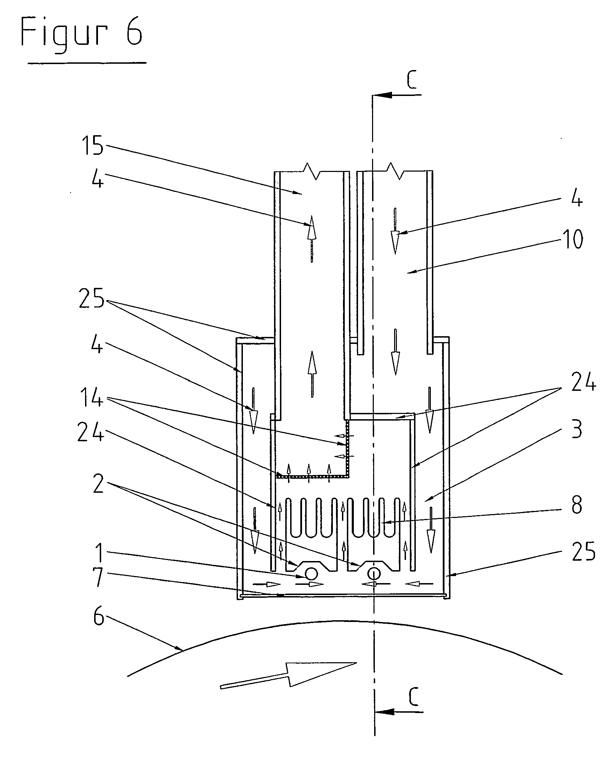

Figur 6 einen schematischen Querschnitt durch ein erfindungsgemäßes Bestrahlungsmodul unter Weglassung der auf das zu bestrahlende Substrat düsenartig gerichteten Temperiermittelzuführung und einer hierzu korrespondierenden Temperiermittelabführung zum Abtransport des dem Substrat entlanggeströmten Temperiermittels, wobei das Temperiermittel zunächst die Außenwände des Bestrahlungsmoduls und die strahlungsdurchlässige Explosiunsschutz-Platte auf niedrige Temperaturen abkühlt, um eine Explosionsgefahr durch zu heiße Wände des Bestrahlungsmoduls oder eine zu heiße Explosionsschutz-Platte sicher zu vermeiden und anschließend die Innenseite der Temperiermittelführung sowie die Emitter und die Reflektoren samt Kühlrippen kühlt, um anschließend zur Erwärmung des Substrates mit Hilfe der hier nicht dargestellten, gegebenenfalls düsenartigen Temperiermittelzuführungen auf das zu erwärmende Substrat gerichtet oder nach außen abgeführt zu werden;
Figur 7 einen schematischen Querschnitt eines erfindungsgemäßen Bestrahlungsmoduls entlang der Linie C-C in Figur 6.

Wie bereits aus Figur 1 hervorgeht, umfaßt die erfindungsgemäße Vorrichtung zur Erwärmung von Substraten einen oder mehrere Emitter (1) zur Emission von elektromagnetischer Strahlung im Wellenlängenbereich von 200 nm bis 10000 nm, vorzugsweise von 700 nm bis 2500 nm, insbesondere von 800 nm bis 1500 nm.

In der Regel verfügt die erfindungsgemäße Vorrichtung zur Erwärmung von Substraten darüberhinaus über einen oder mehrere starre oder zumindest in ihrer Geometrie oder hinsichtlich ihrer Ausrichtung oder ihres Anbringungsortes verstellbare Reflektoren (2) zur Ausrichtung der von dem oder den Emittern (1) emittierten Strahlung in Richtung eines zu bestrahlenden Substrates (6).

Gegebenenfalls verfügen die Reflektoren (2) über Kanäle (11) für ein flüssiges und/oder gasförmiges Kühlmittel beziehungsweise Temperiermittel (4).

Bei dem zu bestrahlenden Substrat (6) handelt es sich beispielsweise um lackierte Flächen oder um bedruckte Flächen im Rahmen eines drucktechnischen Prozesses.

Ein wesentliches Merkmal der erfindungsgemäßen Vorrichtung zur Erwärmung von Substraten besteht darin, daß sie eine oder mehrere ein- oder mehrteilige und beispielsweise im wesentlichen rohrförmige, zylinderförmige, kegelförmige, trommelförmige oder kammerförmige Temperiermittelführungen (3) zur Führung eines verdichteten oder nicht verdichteten gasförmigen und/oder flüssigen Kühlmittels beziehungsweise Temperiermittels (4) entlang dem oder den Emittern (1) und/oder entlang dem oder den Reflektoren (2) und/oder entlang den Kühlrippen (8; 25, 26) der Reflektoren (2) und/oder entlang den Außenseiten und/oder den Innenseiten der Wandungen (24) der Temperiermittelführung (3) umfaßt.

In der Regel weist diese mindestens eine Temperiermittelführung (3) separat von ihr stromabwärts einen oder mehrere Strömungskanäle (5) zur Ausrichtung sowie zur Erhöhung der Strömungs-Geschwindigkeit des durchströmenden Kühlmittels oder erwärmten Temperiermittels (4) auf.

Alternativ hierzu können im stromabwärtigen Bereich der Temperiermittelführung (3) sowie in mittelbarer oder unmittelbarer Verbindung hierzu, ein oder mehrere von der mindestens einen Temperiermittelführung (3) separate Strömungskanäle (5) zur Ausrichtung sowie zur Erhöhung der Strömungsgeschwindigkeit des durchströmenden Kühlmittels oder Temperiermittels (4) auf das zu bestrahlende Substrat (6) hin vorgesehen sein.

Vorzugsweise sind diese Strömungskanäle (5) stumpfwinklig und/oder spitzwinklig und/oder rechtwinklig und/oder parallel von oben und/oder von unten auf das zu bestrahlende Substrat (6) ausrichtbar, wobei die aus den Strömungskanälen (5) austretende Temperiermittel-Strömung beispielsweise laminar, turbulent oder verwirbelt ist.

Zur Ausrichtung sowie zur Erhöhung der Strömungsgeschwindigkeit des durchströmenden Temperiermittels (4) können die Austrittsöffnungen des oder der Strömungskanäle (5) beispielsweise im wesentlichen düsenartig mit unveränderbaren oder veränderbaren Querschnitten ausgestaltet sein. Dabei kann der Querschnitt des Strömungskanales beispielsweise stetig und/oder unstetig veränderlich sein.

In der Regel liegt die Strömungsgeschwindigkeit des Kühlmittels beziehungsweise Temperiermittels (4) beim Austritt aus dem oder den Strömungskanälen (5) im Bereich von 5 m pro Sekunde bis 200 m pro Sekunde, vorzugsweise von 10 m pro Sekunde bis 150 m pro Sekunde, insbesondere im Bereich von 20 m pro Sekunde bis 100 m pro Sekunde.

Der Vorteil einer Ausrichtung des gegebenenfalls durch die Reflektoren (2) und/oder die Emitter (1) erhitzten Kühlmittels beziehungsweise Temperiermittels (4) in einem gegebenenfalls scharfen, gebündelten Strahl auf die Oberfläche des zu erwärmenden Substrates (6) führt insbesondere zu dem Vorteil, daß die laminar an der Oberfläche des zu erwärmenden Substrates (6) anhaftende Grenzschicht zumindest etwas "aufgerissen" wird.

Insbesondere in dem zu erwärmenden Substrat enthaltene, unerwünschte Lösungsmittelreste können dann besonders schnell und effektiv aus dem zu erwärmenden Substrat (6) entfernt werden. Unterstützt wird dieser Grenzschicht-Aufreiß- und -Ausspüleffekt durch die vorzugsweise dem "Aufreißvorgang" nachgeschaltete Bestrahlung mittels der Emitter (1).

Ein wesentlicher Vorteil der erfindungsgemäßen Vorrichtung zur Erwärmung von Substraten mit solchen beispielsweise düsenartigen Strömungskanälen (5) liegt darin, daß die Trocknungszeit des zu erwärmenden Substrates erheblich verkürzt wird und die Durchlaufgeschwindigkeit im Vergleich zu herkömmlichen Vorrichtungen zur Erwärmung von Substraten um mindestens 50 % erhöht werden kann. Die drastische Erhöhung der Bandlaufgeschwindigkeit führt zu einem äußerst wünschenswerten, erheblich gesteigerten Durchsatz beispielsweise der gesamten drucktechnischen Anlage oder Zackierstraße.

Vorzugsweise sind das Volumen und/oder die Strömungsgeschwindigkeit des Temperiermittels (4) beispielsweise durch Klappen oder Mischklappen (12) steuerbar und/oder durch einen Regelprozeß regelbar.

Die gegebenenfalls vorgesehene permanente Überwachung des Volumens und/oder der Strömungsgeschwindigkeit des Temperiermittels (4) leistet einen wesentlichen Beitrag zur explosionsgeschützten Ausgestaltung der erfindungsgemäßen Vorrichtung zur Erwärmung von Substraten.

Die laminare Grenzschicht (19) an der oder den Oberflächen des zu bestrahlenden Substrates (6) kann stromaufwärts und/oder stromabwärts von der erfindungsgemäßen Vorrichtung zur Erwärmung von Substraten und/oder während der Passage der Vorrichtung zur Erwärmung von Substraten ungestört laminar sein und laminar erhalten bleiben.

Alternativ hierzu kann die laminar an der oder den Oberflächen des zu bestrahlenden Substrates (6) anhaftende Grenzschicht durch eine oder mehrere stromaufwärtig und/oder stromabwärtig von der erfindungsgemäßen Vorrichtung zur Erwärmung von Substraten und/oder innerhalb dieser ein- oder beidseitig des Substrates (6) vorgesehene mechanisch, aerodynamisch, elektrisch oder durch Erzeugung eines Plasmas wirkende Einrichtungen (21) zur Verwirbelung der laminaren Grenzschicht (19) in eine turbulente Grenzschicht (22) umwandelbar sein.

Zum Zwecke des "Aufreißens" der laminaren, an der oder den Substrat-Oberflächen anhaftenden Grenzschicht (19) können jeweils eine, zwei, drei, vier oder mehrere Einrichtungen (21) zum Ablösen und Verwirbeln dieser an dem zu bestrahlenden Substrat anhaftenden laminaren Grenzschicht (19) stromaufwärts von dem Substrateinlaß (16) der erfindungsgemäßen Vorrichtung zum Erwärmen eines Substrates (6) und/oder innerhalb dieser Vorrichtung in dem Bereich zwischen der Austrittsöffnung eines Temperiermittel-Zufuhrkanales (13) und der Eintrittsöffnung eines Temperiermittel-Abführkanales (9) und/oder stromabwärts von der Substratauslaßöffnung (23) der Vorrichtung zur Erwärmung eines Substrates (6) vorgesehen sein.

Vorzugsweise umfaßt jede Einrichtung (21) jeweils eine Grenzschicht-Aufladeelektrode (17) in einem Abstand von dem zu bestrahlenden Substrat im Bereich von 0,01 mm bis 200,0 mm, vorzugsweise im Bereich von 1,0 mm bis 50,0 mm, insbesondere im Bereich von 2,0 mm bis 15,0 mm, einerseits des zu bestrahlenden Substrates (6).
In der Regel sind auf der gegenüberliegenden anderen Seite des zu bestrahlenden Substrates (6) eine oder mehrere mit der jeweiligen anderseitigen Grenzschicht-Aufladeelektrode (17) zusammenwirkende Gegenelektroden (18) vorgesehen, wobei die jeweilige Gegenelektrode (18) mit dem zu bestrahlenden Substrat (6) ganzflächig oder abschnittsweise in mittelbarem oder unmittelbarem Kontakt steht oder von dem zu bestrahlenden Substrat (6) beabstandet ist.

Im Allgemeinen ist die mindestens eine Grenzschicht-Aufladeelektrode (17) in Form einer Koronaelektrode, Plasmaquelle, Leiste, Kante, Platte, Trommel, Walze, Rolle oder eines Kammes, Drahtes, Stabes oder eines Seiles, Gitters oder Netzes ausgebildet.

Die zu der Grenzschicht-Aufladeelektrode (17) korrespondierende Gegenelektrode (18) kann beispielsweise in Form einer Koronaelektrode, Plasmaquelle, Leiste, Kante, Platte, Trommel, Walze, Rolle oder eines Kammes, Drahtes, Stabes oder eines Seiles, Gitters oder Netzes ausgebildet sein.

In beiden Fällen können die Trommeln, Walzen oder Rollen feststehend oder mit dem durchlaufenden und zu bestrahlenden Substrat (6) rotativ angetrieben oder nicht-rotativ angetrieben mitlaufend sein.

In der Regel weist jede Grenzschicht-Aufladeelektrode (17) im Vergleich zu ihrer korrespondierenden Gegenelektrode (18) eine entgegengesetzte Polarität von Hochspannung oder Niederspannung auf. Alternativ hierzu kann die Grenzschicht-Aufladeelektrode (17) positive oder negative Polarität besitzen und die korrespondierende Gegenelektrode (18) durch einen Masseanschluß geerdet sein. Alternativ hierzu können benachbarte Elektrodenspitzen der Grenzschicht-Aufladeelektrode (17) entgegengesetzte Polarität (+ oder -) aufweisen und die korrespondierende Gegenelektrode (18) kann durch einen Masseanschluß geerdet sein.

Der Vorteil der gegebenenfalls vorhandenen Einrichtungen (21) zur Verwirbelung der laminaren, an dem Substrat (6) anhaftenden Grenzschicht (19) ist insbesondere in einer erheblichen Einsparung derjenigen Energie zu sehen, welche anläßlich einer Trocknung beziehungsweise Erwärmung des Substrates (6) für die Emitter (1) und/oder für die Zirkulation beziehungsweise das Blasen des Temperiermittels (4) erforderlich ist.

Die erforderliche Energie ist im Falle der erfindungsgemäß gegebenenfalls turbulenten Grenzschicht deutlich niedriger als im Falle einer laminar auf dem Substrat (6) anhaftenden Grenzschicht.

Darüber hinaus erlaubt das "Aufreissen" der laminaren Grenzschicht eine deutlich schnellere und vollständigere Trocknung beziehungsweise Erwärmung oder Abkühlung des Substrates (6) als dies im Falle einer laminaren Grenzschicht möglich ist.

Im Allgemeinen handelt es sich bei dem oder den Emittern (1) um eine oder mehrere Vorrichtungen zur Emission elektromagnetischer Wellen.
Vorzugsweise sind die Emitter (1) beispielsweise in Form eines oder mehrerer Leuchtmittel mit metallischer oder keramischer Glühwendel, eines oder mehrerer Halogenstrahler, eines oder mehrerer Xenonstrahler, eines oder mehrerer Keramikstrahler, eines oder mehrerer Gasentladungsleuchtmittel, eines oder mehrerer UV-Strahler, eines oder mehrerer IR-Strahler, oder in Form einer Kombination hiervon, ausgebildet.

In der Regel ist der mindestens eine Emitter (1) in seiner Neigung und/oder in der Horizontalen und/oder in der Vertikalen und/oder parallel zu seiner Längsachse verstellbar.

Der oder die Reflektoren (2) können in Form von einem oder mehreren Polygonzügen ausgebildet sein, wobei jeder Polygonzug einen polygonalen, vieleckigen Querschnitt aufweist und sich zumindest abschnittsweise sowie parallel zu dem oder den Emittern (1) erstreckt.

Alternativ hierzu können die Reflektoren (2) einen Querschnitt aufweisen, welcher Kurvensegmente und/oder Geraden und/oder Winkel -oder eine Kombination hiervon- umfaßt oder vollständig hieraus besteht.

In besonders bevorzugten Ausführungsformen können der oder die Reflektoren (2) in der Neigung und/oder in der Horizontalen und/oder in der Vertikalen und/oder parallel zur Längsachse des oder der Emitter verstellbar sein.

Gegenüberliegend des oder der Emitter (1) können auf der anderen Seite des zu bestrahlenden Substrates (6) ein, zwei, drei oder mehrere Gegenreflektoren (20) zur Reflexion von bereits durch das zu bestrahlende Substrat (6) hindurchgetretener Strahlung vorgesehen sein.

Die fakultative Anbringung eines solchen Gegenreflektors (20) kann zu einer erheblichen Einsparung der den Emittern (1) zur Verfügung zu stellenden Energie führen, da im Falle des Einsatzes eines Gegenreflektors (20) eine vollständige Ausnutzung der von den Emittern (1) abgegebenen elektromagnetischen Strahlung erfolgt. Insbesondere kann dann sogar der bereits einmal durch das Substrat (6) hindurchgetretene Strahlungsanteil durch Reflexion auf das Substrat (6) nochmals zu Erwärmungszwecken genutzt werden.

Gegebenenfalls umfaßt die mindestens eine Temperiermittelführung (3) eine oder mehrere Mischvorrichtungen (12) zur gesteuerten oder geregelten Zufuhr eines Kühlmittels oder Temperiermittels (4) mit Umgebungstemperatur oder in temperiertem Zustand durch eine oder mehrere Temperiermittelzuführungen (10) und/oder zur gesteuerten oder geregelten Entnahme von erwärmten Kühlmittel beziehungsweise Temperiermittel (4) beispielsweise über eine oder mehrere Temperiermittelabführungen (15).

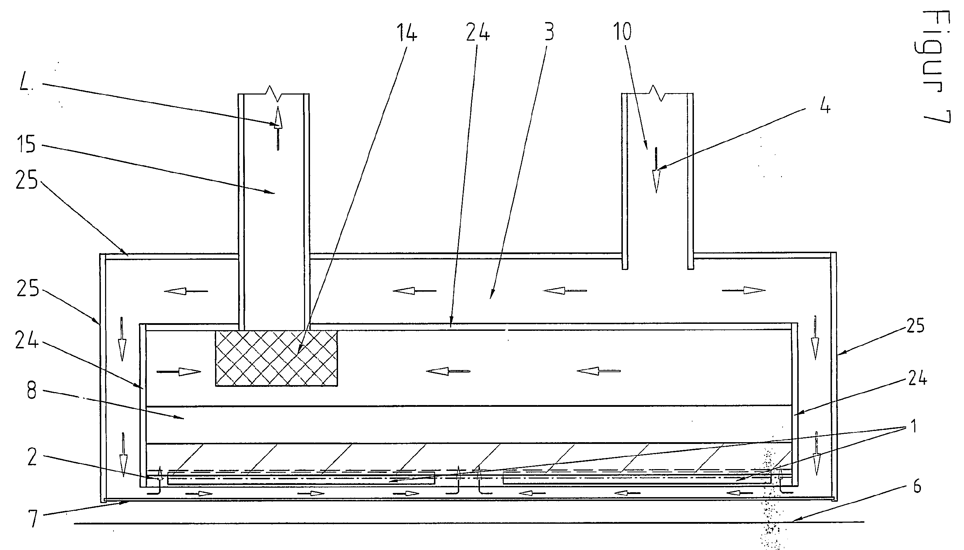

So zeigen die Figuren 6 und 7, daß das Temperiermittel (4) aus einer Temperiermittelzuführung (10) kommend beispielsweise zunächst die Wandungen (24) einer beispielsweise U-schienenförmigen Temperiermittelführung (3) außenseitig umspülen kann und dann zwischen der Innenseite der Wandungen (24) der Temperiermittelführung (3) einerseits und einem Reflektor (2) oder dessen Kühlrippen (8) andererseits und/oder zwischen einer strahlungsabwärts der Emitter (1) vorgesehenen Explosionsschutz-Platte (7) einerseits und den Reflektoren (2) andererseits und/oder zwischen zwei spaltbreit voneinander bebstandeten Reflektoren (2) und/oder durch Aussparungen innerhalb der Reflektoren (2) in Richtung eines mit der Temperiermittelführung (3) in Verbindung stehenden Temperiermittelabführkanals (15) abströmt.

Es liegt auf der Hand, daß das aus dem Temperiermittelabführkanal (15) der Temperiermittelführung (3) abströmende erwärmte Temperiermittel (4) entweder nach außen abführbar oder beispielsweise über einen sich beispielsweise düsenartig verjüngenden Zufuhrkanal (13) unvermischt oder vermischt mit einem weiteren Temperiermittel (4) auf das zu bestrahlende Substrat richtbar ist.

Der besondere Vorteil dieser Temperiermittelführung ist darin zu sehen, daß die Wandungen (24) der Temperiermittelführung (3) sowie die diese gegebenenfalls außenseitig umfassenden Wandungen (25) der Temperiermittelzuführung (10) und insbesondere die Explosionsschutz-Platte (7) nötigenfalls lediglich eine solch niedrige Temperatur aufweisen, daß die Gefahr einer Explosion der aus dem bestrahlten Substrat (6) entweichenden Lösungsmitteldämpfe sicher ausschließbar ist.

In diesem Zusammenhang ist klarzustellen, daß der innere Temperiermittelkreislauf innerhalb der die Emitter (1) und den Reflektor (2) samt Kühlrippen (8) aufnehmenden Temperiermittelführung (3) und der zugehörigen Temperiermittelzuführung (10) sowie der zugehörigen Temperiermittelabführung (15) völlig getrennt von dem äußeren Temperiermittelkreislauf sein kann, welcher durch einen auf das Substrat (6) gerichteten Temperiermittel-Zufuhrkanal (13), entlang der strahlungsdurchlässigen Explosionsschutz-Platte und abschließend durch einen Temperiermittel-Abführkanal (9) fließt.

Alternativ hierzu können der äußere und der innere Temperiermittelkreislauf jedoch mittelbar oder unmittelbar strömungstechnisch miteinander in Verbindung stehen oder miteinander oder durch Zufuhr zusätzlichen Temperiermittels mischbar sein.

Die Temperiermittel (4) innerhalb des äußeren Temperiermittelkreislaufes und des inneren Temperiermittelkreislaufes können hinsichtlich ihrer Temperatur und/oder Zusammensetzung gleich oder voneinander verschieden sein.

Vorzugsweise wird das in dem inneren Temperiermittelkreislauf erwärmte Temperiermittel unvermischt oder vermischt mit neuem Temperiermittel als Temperiermittel des äußeren Temperiermittelkreislaufes verwendet.

Wie insbesondere aus Figur 1 hervorgeht, kann die erfindungsgemäße Vorrichtung zur Erwärmung von Substraten (6) einen oder mehrere separate stromabwärtige Abluftkanäle (9) zur Abführung des über den oder die Strömungskanäle (5; 13) auf das zu bestrahlende Substrat (6) gerichteten gasförmigen und/oder flüssigen, gegebenenfalls temperierten Temperiermittels (4) umfassen, vorzugsweise stromabwärts nach der Passage des Temperiermittels (4) über das zu bestrahlende Substrat (6).

In der Regel stehen der oder die Abluftkanäle (9) mit einer oder mehreren Vorrichtungen zur Erzeugung von Unterdruck in Verbindung.

Alternativ oder zusätzlich hierzu können der oder die Abluftkanäle (9) mit einer oder mehreren Mischvorrichtungen (12) zur gesteuerten oder geregelten Zuleitung beispielsweise von Frischluft, Temperiermittel oder Kühlmittel mittelbar oder unmittelbar in Verbindung stehen.

Wie in Figur 1 dargestellt, kann die erfindungsgemäße Vorrichtung zur Erwärmung von Substraten (6) einen separaten oder mit der Temperiermittelführung (3) mittelbar oder unmittelbar in Verbindung stehenden Temperiermittel- beziehungsweise Kühlmittel-Zufuhrkanal (13) umfassen, welcher in strömungstechnischer Hinsicht mittelbar über eine Mischvorrichtung (12) oder unmittelbar mit dem oder den Strömungskanälen (5) in Verbindung steht.

In der Regel ist jede Mischvorrichtung (12) in Form von Schiebern, Drehschiebern, Ventilen oder Drosselklappen ausgebildet.

Insbesondere zur explosionsgeschützten Ausbildung der erfindungsgemäßen Vorrichtung zur Erwärmung von Substraten (6) können beispielsweise die Kühlmittelführung (3) und/oder die Strömungskanäle (5) insbesondere in ihren stromabwärtigen Bereichen einen oder mehrere Funkengitter (14) und/oder Partikelfilter umfassen, durch welche das erwärmte Kühlmittel beziehungsweise Temperiermittel (4) strömt.

Insbesondere bei den explosionssicheren Ausführungsformen gemäß den Figuren 6 und 7 kann es vorteilhaft sein, Funkengitter und/oder Partikelfilter (14) einfach oder mehrfach vor dem Einlaß der Temperiermittelabführung (15) aus der Temperiermittelführung (3) vorzusehen.

Die Ausrichtung des oder der Strömungskanäle (5) erfolgt beispielsweise in Bahnlaufrichtung des zu bestrahlenden Substrates (6).

Insbesondere zur Verbesserung der vorbeschriebenen "Grenzschicht-Aufreißwirkung" des gegebenenfalls scharfen Kühlmittel- beziehungsweise Temperiermittelstromes kann die Ausströmrichtung des oder der Strömungskanäle (5) entgegengesetzt zur Bahnlaufrichtung des zu bestrahlenden Substrates (6) ausgerichtet sein.

Gegebenenfalls sind in dem Strahlengang zwischen dem oder den Emittern (1) und dem zu bestrahlenden Substrat (6) eine oder mehrere Blenden vorgesehen, welche starr oder hinsichtlich ihrer Geometrie und/oder ihrer Ausrichtung und/oder ihres Anbringungsortes verstellbar sind.

Die mindestens eine Blende kann beispielsweise vertikal und/oder horizontal verschiebbar und/oder schwenkbar sein, wobei mittels einer Verstellung der Blendenöffnung der Strahlendurchlaß veränderbar ist.

Diese Blenden können beispielsweise in Form eines oder mehrerer starrer oder verstellbarer Polygonzüge ausgestaltet sein oder einen Querschnitt aufweisen, welcher Kurvensegmente und/oder Geraden und/oder Winkel -oder eine Kombination hiervon- umfaßt oder vollständig hieraus besteht.

Selbstverständlich ist es möglich, anstelle einer Blende zwei Blenden vorzusehen:
So kann die Durchlaßbreite des Strahlenganges beispielsweise durch mindestens zwei in Längsrichtung des Strahlenganges hintereinander angeordnete Blenden regelbar sein, wobei diese Blenden abhängig oder unabhängig voneinander verstellbar sind und wobei der Strahlendurchlaß beidseitig durch paarweise vorhandene Blenden begrenzt ist.

In der Regel erfährt zumindest ein Anteil der von dem mindestens einen Emitter (1) abgegebenen Strahlung im Strahlengang eine Mehrfach-Reflexion an der mindestens eine Blende.

Gegebenenfalls sind in dem Strahlengang zwischen dem oder den Emittern (1) und dem zu bestrahlenden Substrat (6) ein oder mehrere Strahlenteiler vorgesehen.

Die Farbtemperatur jedes Emitters (1) beträgt beispielsweise mindestens 2300° Kelvin.

In der Regel sind zwischen dem zu bestrahlenden Substrat (6) und dem oder den Emittern (1) eine oder mehrere strahlungsdurchlässige Platten (7) -gegebenenfalls druckdichtvorgesehen.

Die druckdichte Anbringung der strahlungsdurchlässigen Platte (7) ist insbesondere unter dem Aspekt eines Explosionsschutzes vorteilhaft.

Bei der gegebenenfalls vorhandenen teilweise oder vollständig strahlungsdurchlässigen Explosionsschutz-Platte (7) handelt es sich beispielsweise um einen Spektralfilter.

Zusammenfassend ist festzustellen, daß mit der erfindungsgemäßen Vorrichtung zur Erwärmung von Substraten dank des Einsatzes von Emittern (1) zur Ausstrahlung elektromagnetischer Wellen und des erwärmten Kühlmittel- beziehungsweise Temperiermittelstromes (4) besonders große Wärmemengen in kurzer Zeit dem zu erwärmenden Substrat zugeführt werden können.
Die Möglichkeit der Zufuhr von besonders großen Wärmemengen auf das zu erwärmende Substrat in kurzer Zeit ist beispielsweise bei der Trocknung bei hohen Bandgeschwindigkeiten des zu erwärmenden Substrates vorteilhaft, insbesondere im drucktechnischen Prozeß oder bei Lackiervorgängen.

Da die erfindungsgemäßen Strömungskanäle (5) eine exakte Ausrichtung des erwärmten Kühlmittel- beziehungsweise Temperiermittelstromes auf das zu erwärmende Substrat (6) ermöglichen und die elektromagnetische Strahlung ebenfalls exakt ausschließlich auf das zu erwärmende Substrat (6) richtbar ist, ermöglicht die erfindungsgemäße Vorrichtung eine zielgerichtete und ausschließliche Erwärmung des zu erwärmenden Substrates (6).
Das Problem der bei den bekannten Erwärmungsvorrichtungen gefürchteten Erwärmung des unterhalb des zu erwärmenden Substrates befindlichen Trägermaterials aufgrund des Wärmeleiteffektes, welche stets zu unerwünschten Formveränderungen des Trägermaterials in Gestalt von Schrumpf und/oder Verzug führt, kennt die erfindungsgemäße Vorrichtung deshalb nicht.

Ein weiterer wesentlicher Vorteil der erfindungsgemäßen Vorrichtung ist darin zu sehen, daß sie zur Erwärmung des durch die Strömungskanäle (5) gebündelt austretenden erwärmten Kühlmittel- beziehungsweise Temperiermittelstromes (4) keiner zusätzlichen Energie und insbesondere keiner Energie verschwendenden separaten Heizung bedarf.

Erfindungsgemäß wird zur Erwärmung des Kühlmittel- beziehungsweise Temperiermittelstromes (4) vielmehr die ohnehin anfallende Abwärme der Emitter (1) und/oder der Reflektoren (2) beziehungsweise der Kühlrippen (8) verwendet.

Damit erlaubt die erfindungsgemäße Vorrichtung eine besonders effektive und energiesparende Zufuhr großer Wärmemengen zu einem zu erwärmenden Substrat in kürzester Zeit.

## Patentansprüche

1. Vorrichtung zur Erwärmung von Substraten mit einem oder mehreren Emittern (1) zur Emission von elektromagnetischer Strahlung im Wellenlängenbereich von 200 nm bis 10000 nm sowie mit einem oder mehreren starren oder zumindest in ihrer Geometrie oder hinsichtlich ihrer Ausrichtung oder ihres Anbringungsortes verstellbaren Reflektoren (2) zur Ausrichtung der von dem oder den Emittern (1) emittierten Strahlung in Richtung eines zu bestrahlenden Substrates (6), welche eine oder mehrere separate ein- oder mehrteilige Temperiermittelführungen (3) zur Führung eines verdichteten oder nicht verdichteten gasförmigen und/oder flüssigen Temperiermittels (4) entlang dem oder den Emittern (1) und/oder entlang dem oder den Reflektoren (2) und/oder entlang den Kühlrippen (8) der Reflektoren (2) umfaßt, wobei diese mindestens eine Temperiermittelführung (3) stromabwärts einen oder mehrere Strömungskanäle (5) zur Ausrichtung sowie zur Erhöhung der Strömungs-Geschwindigkeit des durchströmenden Temperiermittels (4) aufweist oder wobei stromabwärts von der mindestens einen Temperiermittelführung (3) ein oder mehrere separate Strömungskanäle (5) zur Ausrichtung sowie zur Erhöhung der Strömungs-Geschwindigkeit des durchströmenden Temperiermittels (4) vorgesehen sind, wobei diese Strömungskanäle (5) stumpfwinklig und/oder spitzwinklig und/oder rechtwinklig und/oder parallel von oben und/oder von unten auf das zu bestrahlende Substrat (6) ausrichtbar sind, **dadurch gekennzeichnet, daß** die Vorrichtung zur Umwandlung der laminaren Grenzschicht (19) an der oder den Oberflächen des zu bestrahlenden Substrates (6) in eine turbulente Grenzschicht (22) stromaufwärts von einem Substrateinlaß (16) und/oder in dem Bereich zwischen der Austrittsöffnung eines Temperiermittel-Zufuhrkanales (13) und der Eintrittsöffnung eines Temperiermittel-Abführkanales (9) und/oder stromabwärts von dem Substratauslaß (23) ein- oder beidseitig des Substrates (6) eine oder mehrere über ein Plasma wirkende Einrichtungen (21) zum Ablösen und Verwirbeln der an dem zu bestrahlenden Substrat anhaftenden laminaren Grenzschicht (19) umfaßt, wobei jede Einrichtung (21) jeweils eine Grenzschicht-Aufladeelektrode (17) in einem Abstand von dem zu bestrahlenden Substrat im Bereich von 0,01 mm bis 200,00 mm einerseits des zu bestrahlenden Substrates (6) umfaßt, während auf der gegenüberliegenden anderen Seite des zu bestrahlenden Substrates (6) eine oder mehrere mit der jeweiligen anderseitigen Grenzschicht-Aufladeelektrode (17) zusammenwirkende Gegenelektroden (18) vorgesehen sind.

2. Vorrichtung nach Anspruch 1, **dadurch gekennzeichnet, daß** die Austrittsöffnungen des oder der Strömungskanäle (5) düsenartig mit unveränderbarem oder veränderbarem Querschnitt ausgestaltet sind, wobei die aus den Strömungskanälen (5) austretende Temperiermittel-Strömung laminar, turbulent oder verwirbelt ist.

3. Vorrichtung nach einem oder mehreren der vorhergehenden Ansprüche, **dadurch gekennzeichnet, daß** die Strömungsgeschwindigkeit des Temperiermittels (4) beim Austritt aus dem oder den Strömungskanälen (5) im Bereich von 5 m pro Sekunde bis 200 m pro Sekunde liegt.

4. Vorrichtung nach einem oder mehreren der vorhergehenden Ansprüche, **dadurch gekennzeichnet, daß** sie jeweils eine, zwei, drei, vier oder mehrere Einrichtungen (21) zum Ablösen und Verwirbeln der an dem zu bestrahlenden Substrat anhaftenden laminaren Grenzschicht (19) umfaßt, welche eine oder mehrere Grenzschicht-Aufladeelektroden (17) und eine oder mehrere hiermit zusammenwirkende Gegenelektroden (18) umfaßt, wobei die jeweilige Gegenelektrode (18) mit dem zu bestrahlenden Substrat (6) ganzflächig oder abschnittsweise in mittelbarem oder unmittelbarem Kontakt steht oder von dem zu bestrahlenden Substrat (6) beabstandet ist.

5. Vorrichtung nach einem oder mehreren der vorhergehenden Ansprüche, **dadurch gekennzeichnet, daß** die mindestens eine Grenzschicht-Aufladeelektrode (17) in Form einer Koronaelektrode, Plasmaquelle, Leiste, Kante, Platte, Trommel, Walze, Rolle oder eines Kammes, Drahtes, Stabes oder eines Seiles, Gitters oder Netzes und die korrespondierende Gegenelektrode (18) in Form einer Koronaelektrode, Plasmaquelle, Leiste, Kante, Platte, Trommel, Walze, Rolle oder eines Kammes, Drahtes, Stabes oder eines Seiles, Gitters oder Netzes ausgebildet sind, wobei die Trommeln, Walzen oder Rollen feststehend oder mit dem durchlaufenden und zu bestrahlenden Substrat (6) rotativ angetrieben oder nicht-rotativ angetrieben mitlaufend sind, wobei jede Grenzschicht-Aufladeelektrode (17) im Vergleich zu ihrer korrespondierenden Gegenelektrode (18) eine entgegengesetzte Polarität von Hochspannung oder Niederspannung aufweist oder wobei die Grenzschicht-Aufladeelektrode (17) positive oder negative Polarität besitzt und die korrespondierende Gegenelektrode (18) durch einen Masseanschluß geerdet ist oder wobei benachbarte Elektrodenspitzen der Grenzschicht-Aufladeelektrode (17) entgegengesetzte Polarität (+ oder -) aufweisen und die korrespondierende Gegenelektrode (18) durch einen Masseanschluß geerdet sind.

6. Vorrichtung nach einem oder mehreren der vorhergehenden Ansprüche, **dadurch gekennzeichnet, daß** das Volumen und/oder die Strömungsgeschwindigkeit des Temperiermittels (4) regelbar sind.

7. Vorrichtung nach einem oder mehreren der vorhergehenden Ansprüche, **dadurch gekennzeichnet, daß** es sich bei dem oder den Emittern (1) um eine oder mehrere Vorrichtungen zur Emission elektromagnetischer Wellen in Form eines oder mehrerer Leuchtmittel mit metallischer oder keramischer Glühwendel, eines oder mehrerer Halogenstrahler, eines oder mehrerer Xenonstrahler, eines oder mehrerer Keramikstrahler, eines oder mehrerer Gasentladungsleuchtmittel, eines oder mehrerer UV-Strahler, eines oder mehrerer IR-Strahler, oder einer Kombination hiervon, handelt.

8. Vorrichtung nach einem oder mehreren der vorhergehenden Ansprüche, **dadurch gekennzeichnet, daß** der mindestens eine Emitter (1) in der Neigung und/oder in der Horizontalen und/oder in der Vertikalen und/oder parallel zu seiner Längsachse verstellbar ist.

9. Vorrichtung nach einem oder mehreren der vorhergehenden Ansprüche, **dadurch gekennzeichnet, daß** der oder die Reflektoren (2) in Form von einem oder mehreren Polygonzügen ausgebildet sind, wobei jeder Polygonzug einen polygonalen, vieleckigen Querschnitt aufweist und sich zumindest abschnittsweise sowie parallel zu dem oder den Emittern (1) erstreckt.

10. Vorrichtung nach einem oder mehreren der Ansprüche 1 bis 6, **dadurch gekennzeichnet, daß** der oder die Reflektoren (2) einen Querschnitt aufweisen, welcher Kurvensegmente und/oder Geraden und/oder Winkel -oder eine Kombination hiervon- umfaßt oder vollständig hieraus besteht.

11. Vorrichtung nach einem oder mehreren der vorhergehenden Ansprüche, **dadurch gekennzeichnet, daß** der oder die Reflektoren (2) in der Neigung und/oder in der Horizontalen und/oder in der Vertikalen und/oder parallel zur Längsachse des oder der Ermitter (1) verstellbar sind.

12. Vorrichtung nach einem oder mehreren der vorhergehenden Ansprüche, **dadurch gekennzeichnet, daß** gegenüberliegend des oder der Emitter (1) auf der anderen Seite des zu bestrahlenden Substrates (6) ein, zwei, drei oder mehrere Gegenreflektoren (20) zur Reflexion von bereits durch das zu bestrahlende Substrat (6) hindurchgetretener Strahlung vorgesehen sind.

13. Vorrichtung nach einem oder mehreren der vorhergehenden Ansprüche, **dadurch gekennzeichnet, daß** die Temperiermittelführung (3) eine oder mehrere Mischvorrichtungen (12) zur gesteuerten oder geregelten Zufuhr eines Temperiermittels (4) mit Umgebungstemperatur oder in temperiertem Zustand durch eine oder mehrere Temperiermittelzuführungen (10) und/oder zur gesteuerten oder geregelten Entnahme von erwärmtem Temperiermittel (4) über eine oder mehrere Temperiermittelabführungen (15) umfaßt.

14. Vorrichtung nach einem oder mehreren der vorhergehenden Ansprüche, **dadurch gekennzeichnet, daß** sie einen oder mehrere stromabwärtige Abluftkanäle (9) zur Abführung des über den oder die Strömungskanäle (5) auf das zu bestrählende Substrat (6) gerichteten gasförmigen und/oder flüssigen, gegebenenfalls temperierten Temperiermittels (4) - nach der Passage des zu bestrahlenden Substrates (6)- umfaßt.

15. Vorrichtung nach einem oder mehreren der vorhergehenden Ansprüche, **dadurch gekennzeichnet, daß** der oder die Abluftkanäle (9) mit einer oder mehreren Vorrichtungen zur Erzeugung von Unterdruck und/oder mit einer oder mehreren Mischvorrichtungen (12) zur gesteuerten oder geregelten Zufuhr von Luft oder Temperiermittel mittelbar oder unmittelbar in Verbindung stehen.

16. Vorrichtung nach einem oder mehreren der vorhergehenden Ansprüche, **dadurch gekennzeichnet, daß** sie einen Temperiermittel-Zufuhrkanal (13) umfaßt, welcher in strömungstechnischer Hinsicht mittelbar über eine Mischvorrichtung (12) oder unmittelbar mit dem oder den Strömungskanälen (5) in Verbindung steht.

17. Vorrichtung nach einem oder mehreren der vorhergehenden Ansprüche, **dadurch gekennzeichnet, daß** der Temperiermittel-Zufuhrkanal (13) mittelbar oder unmittelbar mit der Temperiermittelführung (3) in Verbindung steht.

18. Vorrichtung nach einem oder mehreren der vorhergehenden Ansprüche, **dadurch gekennzeichnet, daß** das aus einer Temperiermittelzuführung (10) kommende Temperiermittel (4) zunächst die Wandungen (24) der Temperiermittelführung (3) außenseitig umspült und dann zwischen der Innenseite der Wandungen (24) der Temperaturmittelführung (3) einerseits und einem Reflektor (2) oder dessen Kühlrippen (8) andererseits und/oder zwischen einer strahlungsabwärts der Emitter (1) vorgesehenen strahlungsdurchlässigen Explosionsschutz-Platte (7) einerseits und den Reflektoren (2) andererseits und/oder zwischen zwei spaltbreit voneinander beabstandeten Reflektoren (2) und/oder durch Aussparungen innerhalb der Reflektoren (2) in Richtung eines mit der Temperiermittelführung (3) in Verbindung stehenden Temperiermittelabführkanals (15) abströmt.

19. Vorrichtung nach einem oder mehreren der vorhergehenden Ansprüche, **dadurch gekennzeichnet, daß** jede Mischvorrichtung (12) in Form von Schiebern, Drehschiebern, Ventilen oder Drosselklappen ausgebildet ist.

20. Vorrichtung nach einem oder mehreren der vorhergehenden Ansprüche, **dadurch gekennzeichnet, daß** die Temperiermittelführung (3) und/oder die Strömungskanäle (5) und/oder die Temperiermittelabführung (15) in ihren stromabwärtigen Bereichen ein oder mehrere Funkengitter (14) und/oder Partikelfilter umfassen, durch welche das erwärmte Temperiermittel (4) fließt.

21. Vorrichtung nach einem oder mehreren der vorhergehenden Ansprüche, **dadurch gekennzeichnet, daß** die Ausströmrichtung des oder der Strömungskanäle (5) in Bahnlaufrichtung oder entgegengesetzt zur Bahnlaufrichtung des zu bestrahlenden Substrates (6) ausgerichtet ist.

22. Vorrichtung nach einem oder mehreren der vorhergehenden Ansprüche, **dadurch gekennzeichnet, daß** in dem Strahlengang zwischen dem oder den Emittern (1) und dem zu bestrahlenden Substrat (6) eine oder mehrere Blenden vorgesehen sind, welche starr oder hinsichtlich ihrer Geometrie und/oder ihrer Ausrichtung verstellbar sind.

23. Vorrichtung nach einem oder mehreren der vorhergehenden Ansprüche, **dadurch gekennzeichnet, daß** die Blenden in Form eines oder mehrerer starrer oder hinsichtlich ihrer Geometrie oder Ausrichtung oder Anbringungspositionen verstellbarer Polygonzüge ausgestaltet sind oder einen Querschnitt aufweisen, welcher Kurvensegmente und/oder Geraden und/oder Winkel -oder eine Kombination hiervon- umfaßt oder vollständig hieraus besteht.

24. Vorrichtung nach einem oder mehreren der vorhergehenden Ansprüche, **dadurch gekennzeichnet, daß** die mindestens eine Blende vertikal und/oder horizontal verschiebbar und/oder schwenkbar ist, wobei mittels einer Verstellung der Blendenöffnung der Strahlendurchlaß veränderbar ist.

25. Vorrichtung nach einem oder mehreren der vorhergehenden Ansprüche, **dadurch gekennzeichnet, daß** die Durchlaßbreite des Strahlenganges durch mindestens zwei in Längsrichtung des Strahlenganges hintereinander angeordnete Blenden regelbar ist, wobei diese Blenden abhängig oder unabhängig voneinander verstellbar sind und wobei der Strahlendurchlaß beidseitig durch paarweise vorhandene Blenden begrenzt ist.

26. Vorrichtung nach einem oder mehreren der vorhergehenden Ansprüche, **dadurch gekennzeichnet, daß** zumindest ein Anteil der von dem mindestens einem Emitter (1) abgegebenen Strahlung im Strahlengang eine Mehrfach-Reflexion an der mindestens einen Blende erfährt.

27. Vorrichtung nach einem oder mehreren der vorhergehenden Ansprüche, **dadurch gekennzeichnet, daß** im Strahlengang ein oder mehrere Strahlenteiler vorgesehen sind.

28. Vorrichtung nach einem oder mehreren der vorhergehenden Ansprüche, **dadurch gekennzeichnet, daß** die Farbtemperatur jedes Emitters (1) mindestens 2300° Kelvin beträgt.

29. Vorrichtung nach einem oder mehreren der vorhergehenden Ansprüche, **dadurch gekennzeichnet, daß** zwischen dem zu bestrahlenden Substrat (6) und dem oder den Emittern (1) eine oder mehrere strahlungsdurchlässige Platten (7) - gegebenenfalls druckdicht- vorgesehen sind.

30. Vorrichtung nach einem oder mehreren der vorhergehenden Ansprüche, **dadurch gekennzeichnet, daß** die strahlungsdurchlässige Platte (7) ein Spektralfilter ist.

## Claims

1. An apparatus for the heating of substrates with one or more emitters (1) for the emission of electromagnetic radiation in the wavelength range from 200 nm to 10,000 nm and with one or more reflectors (2), which are rigid or adjustable at least in their geometry or with respect to their orientation or their mounting point, for the orientation of the radiation emitted by the emitter or emitters (1) in the direction of a substrate (6) to be irradiated, which apparatus includes one or more separate single-part or multipart guides (3) for a temperature-control medium for the guidance of a compressed or non-compressed gaseous and/or liquid temperature-control medium (4) along the emitter or emitters (1) and/or along the reflector or reflectors (2) and/or along the cooling fins (8) of the reflectors (2), whereby this at least one guide (3) for the temperature-control medium has downstream one or more flow channels (5) for orientating and increasing the flow rate of the through-flowing temperature-control medium (4) or whereby, downstream of the at least one guide (3) for the temperature-control medium, one or more separate flow channels (5) are provided for orientating and increasing the flow rate of the through-flowing temperature-control medium (4), whereby these flow channels (5) can be orientated at an obtuse angle and/or an acute angle and/or at right angles and/or in parallel from above and/or from below onto the substrate (6) to be irradiated, **characterised in that**, for the conversion of the laminar boundary layer (19) at the surface or surfaces of the substrate (6) to be said irradiated into a turbulent boundary layer (22) upstream of a substrate entrance (16) and/or in the region between the outlet opening of a supply channel (13) for the temperature-control medium and the inlet opening of a discharge channel (9) for the temperature-control medium and/or downstream of the substrate exit (23) on one side or both sides of the substrate (6), the apparatus includes one or more devices (21) acting by means of a plasma for detaching and swirling the laminar boundary layer (19) adhering to the substrate to be irradiated, whereby each device (21) includes a boundary-layer charging electrode (17) at a distance from the substrate to be irradiated in the range from 0.01 mm to 200.00 mm on one side of the substrate (6) to be irradiated, whilst on the opposite other side of the substrate (6) to be irradiated there are provided one or more counter-electrodes (18) co-operating with the respective boundary-layer charging electrode (17) on the other side.

2. The apparatus according to claim 1, **characterised in that** the outlet openings of the flow channel or channels (5) are designed in the manner of a nozzle with a non-variable or variable cross-section, whereby the flow of temperature-control medium emerging from the flow channels (5) is laminar, turbulent or swirling.

3. The apparatus according to one or more of the preceding claims, **characterised in that** the flow rate of the temperature-control medium (4) when exiting from the flow channel or channels (5) lies in the range from 5 m per second to 200 m per second.

4. The apparatus according to one or more of the preceding claims, **characterised in that** it includes one, two, three, four or more devices (21) for detaching and swirling the laminar boundary layer (19) adhering to the substrate to be irradiated, which device includes one or more boundary-layer charging electrodes (17) and one or more counter-electrodes (18) co-operating with the latter, whereby the respective counter-electrode (18) is in indirect or direct contact with the substrate (6) to be irradiated over the whole area or in sections or is spaced apart from the substrate (6) to be irradiated.

5. The apparatus according to one or more of the preceding claims, **characterised in that** the at least one boundary-layer charging electrode (17) is designed in the form of a corona electrode, plasma source, strip, edge, plate, drum, roller, roll or a comb, wire, rod or a rope, grid or net and the corresponding counter-electrode (18) is designed in the form a corona electrode, plasma source, strip, edge, plate, drum, roller, roll or a comb, wire, rod or a rope, grid or net, whereby the drums, rollers or rolls are stationary or co-running with the through-going substrate (6) to be irradiated being driven rotationally or driven non-rotationally, whereby each boundary-layer charging electrode (17), compared to its corresponding counter-electrode (18), has an opposite polarity of high voltage or low voltage or whereby the boundary-layer charging electrode (17) has positive or negative polarity and the corresponding counter-electrode (18) is earthed by means of an earth connection or whereby neighbouring electrode tips of the boundary-layer charging electrode (17) have opposite polarity (+ or -) and the corresponding counter-electrodes (18) are earthed by means of an earth connection.

6. The apparatus according to one or more of the preceding claims, **characterised in that** the volume and/or the flow rate of the temperature-control medium (4) can be regulated.

7. The apparatus according to one or more of the preceding claims, **characterised in that** the emitter or emitters (1) are one or more devices for the emission of electromagnetic waves in the form of one or more illuminants with a metallic or ceramic spiral-wound filament, one or more halogen radiators, one or more xenon radiators, one or more ceramic radiators, one or more gas-discharge illuminants, one or more UV radiators, one or more IR radiators, or a combination thereof.

8. The apparatus according to one or more of the preceding claims, **characterised in that** the at least one emitter (1) can be adjusted in the inclination and/or in the horizontal and/or in the vertical and/or parallel to its longitudinal axis.

9. The apparatus according to one or more of the preceding claims, **characterised in that** the reflector or reflectors (2) are designed in the form of one or more polygon courses, whereby each polygon course has a polygonal, many-cornered cross-section and extends at least in a section and in parallel with the emitter or emitters (1).

10. The apparatus according to one or more of the preceding claims, **characterised in that** the reflector or reflectors (2) have a cross-section which includes curve segments and/or straight lines and/or angles or a combination thereof or consist wholly thereof.

11. The apparatus according to one or more of the preceding claims, **characterised in that** the reflector or reflectors (2) are adjustable in the inclination and/or in the horizontal and/or in the vertical and/or parallel to the longitudinal axis of the emitter or emitters (1).

12. The apparatus according to one or more of the preceding claims, **characterised in that**, opposite the emitter or emitters (1) on the other side of the substrate (6) to be irradiated, there are provided one, two, three or more counter-reflectors (20) for the reflection of radiation that has already passed through the substrate (6) to be irradiated.

13. The apparatus according to one or more of the preceding claims, **characterised in that** the guide (3) for the temperature-control medium includes one or more mixing devices (12) for the controlled or regulated supply of a temperature-control medium (4) at ambient temperature or in a temperature-controlled state through one or more feeds (10) for the temperature-control medium and/or for the controlled or regulated removal of heated temperature-control medium (4) via one or more discharges (15) for the temperature-control medium.

14. The apparatus according to one or more of the preceding claims, **characterised in that** it includes one or more downstream outgoing-air channels (9) for conveying away - after the passage of the substrate (6) to be irradiated - the gaseous and/or fluid temperature-control medium (4), which is temperature-controlled as necessary and directed via the flow channel or channels (5) onto the substrate (6) to be irradiated.

15. The apparatus according to one or more of the preceding claims, **characterised in that** the outgoing-air channel or channels (9) are connected indirectly or directly to one or more devices for generating an underpressure and/or to one or more mixing devices (12) for the controlled or regulated supply of air or temperature-control medium.

16. The apparatus according to one or more of the preceding claims, **characterised in that** it includes a supply channel (13) for the temperature-control medium, which in terms of the flow system is connected indirectly via a mixing device (12) or directly to the flow channel or channels (5).

17. The apparatus according to one or more of the preceding claims, **characterised in that** the supply channel (13) for the temperature-control medium is connected indirectly or directly to the guide (3) for the temperature-control medium.

18. The apparatus according to one or more of the preceding claims, **characterised in that** the temperature-control medium (4) coming from a feed (10) for the temperature-control medium first rinses around the walls (24) of the guide (3) for the temperature-control medium on the outside and then flows away between the inside of the walls (24) of the guide (3) for the temperature-control medium on the one hand and a reflector (2) or its cooling fins (8) on the other hand and/or between a radiation-permeable explosion-protection plate (7) provided, from the radiation viewpoint, downstream of the emitter (1) on the one hand and the reflectors (2) on the other hand and/or between two reflectors (2) spaced apart from one another by a slit width and/or through cutouts inside the reflectors (2) in the direction of a discharge channel (15) for the temperature-control medium, said discharge channel being connected to the guide (3) for the temperature-control medium.

19. The apparatus according to one or more of the preceding claims, **characterised in that** each mixing device (12) is designed in the form of slide dampers, rotary slide dampers, valves or throttle flaps.

20. The apparatus according to one or more of the preceding claims, **characterised in that** the guide (3) for the temperature-control medium and/or the flow channels (5) and/or the discharge (15) for the temperature-control medium include in their downstream regions one or more spark grids (14) and/or particle filters, through which the heated temperature-control medium (4) flows.

21. The apparatus according to one or more of the preceding claims, **characterised in that** the outflow direction of the flow channel or channels (5) is orientated in the direction of the feed path or opposite to the direction of the feed path of the substrate (6) to be irradiated.

22. The apparatus according to one or more of the preceding claims, **characterised in that** there are provided in the beam path between the emitter or emitters (1) and the substrate (6) to be irradiated one or more diaphragms, which are rigid or adjustable in respect of their geometry and/or their orientation.

23. The apparatus according to one or more of the preceding claims, **characterised in that** the diaphragms are designed in the form of one or more polygon courses which are rigid or adjustable with regard to their geometry or orientation or mounting positions or have a cross-section which includes curve segments and/or straight lines and/or angles or a combination thereof or consists wholly thereof.

24. The apparatus according to one or more of the preceding claims, **characterised in that** the at least one diaphragm is vertically and/or horizontally displaceable and/or swivellable, whereby the beam passage can be changed by means of an adjustment of the diaphragm opening.

25. The apparatus according to one or more of the preceding claims, **characterised in that** the passage width of the beam path can be regulated by means of at least two diaphragms arranged one behind the other in the longitudinal direction of the beam path, whereby these diaphragms can be adjusted dependent on or independent of one another and whereby the beam passage is bounded on both sides by diaphragms present in pairs.

26. The apparatus according to one or more of the preceding claims, **characterised in that** at least a part of the radiation delivered by the at least one emitter (1) experiences in the beam path a multiple reflection at the at least one diaphragm.

27. The apparatus according to one or more of the preceding claims, **characterised in that** one or more beam splitters are provided in the beam path.

28. The apparatus according to one or more of the preceding claims, **characterised in that** the colour temperature of each emitter (1) amounts to at least 2300° Kelvin.

29. The apparatus according to one or more of the preceding claims, **characterised in that** one or more radiation-permeable plates (7) - optionally pressure sealed - are provided between the substrate (6) to be irradiated and the emitter or emitters (1).

30. The apparatus according to one or more of the preceding claims, **characterised in that** the radiation-permeable plate (7) is a spectral filter.

## Revendications

1. Dispositif pour le chauffage de substrats avec un ou plusieurs émetteurs (1) pour l'émission de rayonnement électromagnétique dans la plage de longueurs d'onde allant de 200 nm à 10000 nm ainsi qu'avec un ou plusieurs réflecteurs (2) rigides ou au moins réglables du point de vue de leur géométrie ou de leur orientation ou de leur emplacement d'installation servant à l'orientation du rayonnement émis par le ou les émetteurs (1) en direction d'un substrat à irradier (6), comprenant un ou plusieurs guides (3) de produit de refroidissement séparés, en une ou en plusieurs parties, pour le guidage d'un produit de refroidissement (4) gazeux ou liquide compressé ou non le long du ou des émetteurs (1) et/ou le long du ou des réflecteurs (2) et/ou le long des ailettes de refroidissement (8) des réflecteurs (2), ce guide (3) de produit de refroidissement, au moins un, étant pourvu en aval d'un ou de plusieurs canaux d'écoulement (5) pour l'orientation, ainsi que pour l'augmentation de la vitesse d'écoulement, du produit de refroidissement (4) qui s'écoule, ou un ou plusieurs canaux d'écoulement (5) séparés pour l'orientation, ainsi que pour l'augmentation de la vitesse d'écoulement du produit de refroidissement (4) qui s'écoule étant prévus en aval du guide (3) de produit de refroidissement, au moins un, ces canaux d'écoulement (5) pouvant être orientés à angle obtus et/ou à angle aigu et/ou perpendiculairement et/ou parallèlement depuis le haut et/ou depuis le bas vers le substrat (6) à irradier, **caractérisé en ce que** le dispositif pour la transformation de la couche laminaire (19), mitoyenne à la ou aux surfaces du substrat (6) à irradier, en une couche mitoyenne (22) turbulente comporte, en amont d'une entrée du substrat (16) et/ou dans la zone entre l'ouverture de sortie d'un canal (13) d'amenée de produit de refroidissement et l'ouverture d'entrée d'un canal d'évacuation (9) de produit de refroidissement et/ou en aval de la sortie du substrat (23), sur un côté ou sur les deux côtés du substrat (6), un ou plusieurs dispositifs (21), agissant au moyen d'un plasma, pour détacher et faire tourbillonner la couche mitoyenne laminaire (19) adhérant au substrat à irradier, chaque dispositif (21) comprenant à chaque fois une électrode de charge (17) de la couche mitoyenne placée à une distance du substrat à irradier se situant dans la plage de 0,01 mm à 200,00 mm d'un côté du substrat à irradier (6), alors que, du côté opposé du substrat à irradier (6), sont prévues une ou plusieurs contre-électrodes (18) coopérant avec l'électrode de charge de la couche mitoyenne (17) respective placée du côté opposé à celles-ci.

2. Dispositif selon la revendication 1, **caractérisé en ce que** les ouvertures de sortie du ou des canaux d'écoulement (5) sont configurées en forme de buse avec une section fixe ou modifiable, le flux de produit de refroidissement s'écoulant des canaux d'écoulement (5) étant laminaire, turbulent ou tourbillonné.

3. Dispositif selon une ou plusieurs des revendications précédentes, **caractérisé en ce que** la vitesse d'écoulement du produit de refroidissement (4) à la sortie du ou des canaux d'écoulement (5) se situe dans la plage de 5 m par seconde à 200 m par seconde.

4. Dispositif selon une ou plusieurs des revendications précédentes, **caractérisé en ce qu'**il comporte à chaque fois un, deux, trois ou quatre ou plusieurs dispositifs (21) pour détacher et faire tourbillonner la couche mitoyenne laminaire (19) adhérant au substrat à irradier, comprenant une ou plusieurs électrodes de charge (17) de la couche mitoyenne et une ou plusieurs contre-électrodes (18) coopérant avec celles-ci, chaque contre-électrode (18) étant en contact direct ou indirect avec toute la surface du substrat (6) à irradier ou avec des sections de celle-ci, ou étant éloignée du substrat (6) à irradier.

5. Dispositif selon une ou plusieurs des revendications précédentes, **caractérisé en ce que** l'électrode de charge (17) de la couche mitoyenne, au moins une, est réalisée sous la forme d'une électrode corona, d'une source plasma, d'une baguette, d'une arête, d'une plaque, d'un tambour, d'un rouleau, d'un galet, ou d'un peigne, d'un fil, d'une barre ou d'un câble, d'une grille ou d'un filet, et **en ce que** la contre-électrode correspondante (18) est réalisée sous la forme d'une électrode corona, d'une source plasma, d'une baguette, d'une arête, d'une plaque, d'un tambour, d'un rouleau, d'un galet, ou d'un peigne, d'un fil, d'une barre ou d'un câble, d'une grille ou d'un filet, les tambours, galets ou rouleaux étant fixes ou entraînés en rotation ou de manière non rotative avec le substrat (6) à irradier qui défile, chaque électrode de charge (17) de la couche mitoyenne présentant, en comparaison avec sa contre-électrode (18) correspondante, une polarité opposée en haute tension ou en basse tension, ou l'électrode de charge (17) de la couche mitoyenne présentant une polarité positive ou négative et la contre-électrode (18) correspondante étant mise à la terre par une connexion de masse, ou des pointes d'électrodes adjacentes de l'électrode de charge (17) de la couche mitoyenne présentant des polarités opposées (+ ou -) et la contre-électrode (18) correspondante étant mise à la terre par une connexion de masse.

6. Dispositif selon une ou plusieurs des revendications précédentes, **caractérisé en ce que** le volume et/ou la vitesse d'écoulement du produit de refroidissement (4) sont réglables.

7. Dispositif selon une ou plusieurs des revendications précédentes, **caractérisé en ce que** le ou les émetteurs (1) sont constitués par un ou plusieurs dispositifs pour l'émission d'ondes électromagnétiques sous la forme d'une ou de plusieurs lampes à filament métallique ou céramique, d'un ou de plusieurs projecteurs halogènes, d'un ou de plusieurs projecteurs au xénon, d'un ou de plusieurs projecteurs céramique, d'une ou de plusieurs lampes à décharge gazeuse, d'un ou de plusieurs projecteurs UV, d'un ou de plusieurs projecteurs IR, ou d'une combinaison de ceux-ci.

8. Dispositif selon une ou plusieurs des revendications précédentes, **caractérisé en ce que** l'émetteur (1), au moins un, est réglable en inclinaison et/ou dans le plan horizontal et/ou dans le plan vertical et/ou parallèlement à son axe longitudinal.

9. Dispositif selon une ou plusieurs des revendications précédentes, **caractérisé en ce que** le ou les réflecteurs (2) sont configurés sous la forme d'un ou de plusieurs ensembles polygonaux, chaque ensemble polygonal présentant une section polygonale et s'étendant au moins en partie parallèlement au ou aux émetteurs (1).

10. Dispositif selon une ou plusieurs des revendications 1 à 6, **caractérisé en ce que** le ou les réflecteurs (2) présentent une section comprenant des segments de courbes et/ou des droites et/ou des angles - ou une combinaison de ceux-ci - ou sont composé entièrement de ceux-ci.

11. Dispositif selon une ou plusieurs des revendications précédentes, **caractérisé en ce que** le ou les réflecteurs (2) sont réglables en inclinaison et/ou dans le plan horizontal et/ou dans le plan vertical et/ou parallèlement à l'axe longitudinal du ou des émetteurs (1).

12. Dispositif selon une ou plusieurs des revendications précédentes, **caractérisé en ce que** un, deux, trois ou plusieurs contre-réflecteurs (20) sont prévus à l'opposé du ou des émetteurs (1), de l'autre côté du substrat (6) à irradier, pour réfléchir le rayonnement ayant déjà traversé le substrat (6) à irradier.

13. Dispositif selon une ou plusieurs des revendications précédentes, **caractérisé en ce que** le guidage (3) du produit de refroidissement comprend un ou plusieurs dispositif mélangeurs (12) pour l'apport contrôlé ou régulé d'un produit de refroidissement (4) à la température ambiante ou à l'état tempéré au moyen d'une ou de plusieurs lignes d'alimentation de produit de refroidissement (10) et/ou pour le prélèvement contrôlé ou régulé de produit de refroidissement (4) réchauffé au moyen d'une ou de plusieurs lignes d'évacuation (15) de produit de refroidissement.

14. Dispositif selon une ou plusieurs des revendications précédentes, **caractérisé en ce qu'**il comprend un ou plusieurs canaux d'évacuation (9) en aval de l'écoulement, pour évacuer le produit de refroidissement (4) gazeux ou liquide, le cas échéant tempéré, orienté par le ou les canaux d'écoulement (5) vers le substrat (6) à irradier - après le passage du substrat (6).

15. Dispositif selon une ou plusieurs des revendications précédentes, **caractérisé en ce que** le ou les canaux d'évacuation (9) sont en liaison directe ou indirecte avec un ou plusieurs dispositifs de génération d'une sous-pression et/ou avec un ou plusieurs dispositifs mélangeurs (12) pour l'apport contrôlé ou régulé d'air ou de produit de refroidissement.

16. Dispositif selon une ou plusieurs des revendications précédentes, **caractérisé en ce qu'**il comprend un canal (13) d'amenée de produit de refroidissement qui, du point de vue de la technique des fluides, est en liaison indirecte, par le biais d'un dispositif mélangeur (12), ou directe avec le ou les canaux d'écoulement (5).

17. Dispositif selon une ou plusieurs des revendications précédentes, **caractérisé en ce que** le canal (13) d'amenée de produit de refroidissement est en liaison directe ou indirecte avec le guide (3) de produit de refroidissement.

18. Dispositif selon une ou plusieurs des revendications précédentes, **caractérisé en ce que** le produit de refroidissement (4) venant d'une ligne d'alimentation de produit de refroidissement (10) s'écoule d'abord par l'extérieur autour des parois (24) de l'alimentation en produit de refroidissement (3), et s'écoule ensuite entre l'intérieur de la paroi (24) de l'alimentation en produit de refroidissement (3) d'une part et d'un réflecteur (2) ou des ailettes de refroidissement (8) de celui-ci d'autre part, et/ou entre une plaque de protection antidéflagrante (7) prévue en aval du rayonnement de l'émetteur (1) d'une part et des réflecteurs (2) d'autre part, et/ou entre deux réflecteurs (2) séparés par une fente et/ou par des évidements à l'intérieur des réflecteurs (2) en direction d'un canal d'évacuation du produit de refroidissement (15) relié au guide (3) de produit de refroidissement.

19. Dispositif selon une ou plusieurs des revendications précédentes, **caractérisé en ce que** chaque dispositif mélangeur (12) est configuré sous la forme de vannes d'arrêt, de vannes rotatives, de vannes ou de volets de réglage.

20. Dispositif selon une ou plusieurs des revendications précédentes, **caractérisé en ce que** le guide de produit de refroidissement (3) et/ou les canaux d'écoulement (5) et/ou l'évacuation du produit de refroidissement (15) comportent, dans leurs zones aval, une ou plusieurs grille pare-étincelles (14) et/ou filtres à particules, à travers lesquels passe le produit de refroidissement (4) réchauffé.

21. Dispositif selon une ou plusieurs des revendications précédentes, **caractérisé en ce que** la direction d'écoulement du ou des canaux d'écoulement (5) est orientée dans la direction du défilement ou dans la direction opposée au défilement du substrat (6) à irradier.

22. Dispositif selon une ou plusieurs des revendications précédentes, **caractérisé en ce qu'**un ou plusieurs obturateurs fixes ou réglables du point de vue de leur géométrie et/ou de leur orientation sont prévus dans l'ouverture de passage du rayonnement entre le ou les émetteurs (1) et le substrat (6) à irradier.

23. Dispositif selon une ou plusieurs des revendications précédentes, **caractérisé en ce que** les obturateurs sont configurés en forme d'un ou de plusieurs ensembles de polygones fixes ou réglables du point de vue de leur géométrie ou de leur orientation ou de leurs positions d'installation, ou **en ce qu'**ils présentent une section comprenant des segments de courbes et/ou des droites et/ou des angles, ou une combinaison de ceux-ci - ou sont composé entièrement de ceux-ci.

24. Dispositif selon une ou plusieurs des revendications précédentes, **caractérisé en ce que** l'obturateur, au moins un, peut coulisser et/ou pivoter horizontalement et/ou verticalement, un réglage de l'ouverture de l'obturateur permettant de modifier l'ouverture de passage du rayonnement.

25. Dispositif selon une ou plusieurs des revendications précédentes, **caractérisé en ce que** la largeur de l'ouverture de passage du rayonnement est réglable au moyen d'au moins deux obturateurs disposés l'un derrière l'autre dans le sens longitudinal du passage du rayonnement, ces obturateurs étant réglables l'un en fonction de l'autre ou indépendamment, et l'ouverture de passage du rayonnement étant limité des deux côtés par des obturateurs disposés par paires.

26. Dispositif selon une ou plusieurs des revendications précédentes, **caractérisé en ce qu'**au moins une partie du rayonnement émis par l'émetteur (1), au moins un, est soumis dans l'ouverture de passage du rayonnement à une réflexion multiple sur l'obturateur, au moins un.

27. Dispositif selon une ou plusieurs des revendications précédentes, **caractérisé en ce qu'**un ou plusieurs séparateurs de faisceau sont prévus dans l'ouverture de passage du rayonnement.

28. Dispositif selon une ou plusieurs des revendications précédentes, **caractérisé en ce que** la température de la couleur de chaque émetteur (1) est d'au moins 2300° Kelvin.

29. Dispositif selon une ou plusieurs des revendications précédentes, **caractérisé en ce qu'**une ou plusieurs plaques (7) transparentes au rayonnement - le cas échéant étanches à la pression - sont prévues entre le substrat (6) à irradier et le ou les émetteurs (1).

30. Dispositif selon une ou plusieurs des revendications précédentes, **caractérisé en ce que** la plaque (7) transparente au rayonnement est un filtre spectral.
